# EUROPEAN PATENT APPLICATION

(11) **EP 4 830 801 A1**
(43) Date of publication of application: **28.10.2026**
(21) Application number: 25171559.5
(22) Date of filing: 22.04.2025
(51) Int. Cl.: A63F 13/355, A63F 13/424, A63F 13/5375, A63F 13/67, A63F 13/69

(54) **METHOD AND APPARATUS OF PROVIDING GAMING ASSISTANCE**

(71) Applicant: WYVRN, 59800 Lille (FR)
(72) Inventor: VEZZOLI, Eric, 59000 LILLE (FR); WEE, Hong Jie, 138538 SINGAPORE (SG); QUEK, Oliver Shao Wei, 138538 SINGAPORE (SG); SINGH, Karanjot, 138538 SINGAPORE (SG)
(74) Representative: RVDB

(57) **Abstract**

There are provided methods and apparatus of providing gaming assistance to a user playing a video game. To reach that aim, a voice query of the user (10) is received, the voice query relating to a process of the video game. A composite prompt is generated according to user query data representative of the voice query and game state data representative of a current game state associated with the process of the video game. A response to the voice query is obtained from a large language model, called LLM (112), receiving as input the composite prompt, the LLM (112) having been trained to provide gaming assistance. A voice response to the voice query is generated (113) based on the response obtained from LLM (112).

## Description

### FIELD

The present invention relates generally to the field of video games and interactive entertainment systems. More specifically, the present application relates to the field of video games and, in particular, to providing users with assistance while playing video games. The invention also pertains to the field of artificial intelligence, and in particular to Al-based systems capable of analyzing in-game situations and responding to user-initiated requests for guidance.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Modern video games have evolved into complex and richly detailed environments that demand a wide range of cognitive and mechanical skills from players. These games often feature intricate storylines, layered objectives, diverse character abilities, complex controls, and dynamic in-game mechanics. As a result, players may encounter various forms of difficulty or confusion while attempting to progress through different stages of the game. This can include, but is not limited to, locating specific in-game objects, solving puzzles, overcoming strategic challenges, executing time-sensitive maneuvers, or understanding contextual mechanics tied to particular characters, environments, or missions.

To obtain help, players frequently resort to external sources such as online walkthroughs, forums, instructional videos, or community-generated content.

This typically requires the user to pause or exit the game, access a separate device such as a smartphone or computer, perform a manual search, and then interpret and apply the information to their in-game scenario. This process is time-consuming, interrupts the flow of gameplay, and often lacks precision, as the guidance retrieved may not be directly relevant to the player's specific context or progress within the game. Moreover, external sources may expose players to unintended spoilers or information unrelated to their particular objective, thereby negatively affecting the overall gaming experience.

Another challenge in this domain is the diversity of player skill levels, play styles, character builds, and selected difficulty settings. Generic assistance mechanisms often fail to account for these variations, leading to guidance that may be ineffective, inappropriate, or too advanced for the current player context. Furthermore, developers are constrained by the time and resources required to build comprehensive in-game help systems tailored to a broad range of scenarios, which limits the availability and granularity of assistance in most games.

There is a recognized need within the video game industry to enhance the user experience by minimizing frustration and maintaining player engagement throughout gameplay. This includes reducing the cognitive load and friction associated with seeking help, preserving immersion, and making assistance accessible and relevant without disrupting the gameplay environment.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of providing gaming assistance to a user playing a video game, the method being implemented by at least a processor and comprising:
- receiving a voice query of the user, the voice query relating to a process of the video game;
- generating a composite prompt according to user query data representative of the voice query and game state data representative of a current game state associated with the process of the video game;
- obtaining a response to the voice query from a large language model, called LLM, receiving as input the composite prompt, the LLM having been trained to provide gaming assistance;
- generating a voice response to the voice query based on the response.

In an exemplary embodiment, the method further comprises translating the voice query from an audio format to a text format, the user query data being obtained from the text format.

In an exemplary embodiment, the composite prompt comprises a first part corresponding to user prompt and a second part corresponding to system prompt, the user prompt comprising the user query data and the game state data.

In a further exemplary embodiment, the system prompt comprises instructions for the LLM determined according to a genre of the video game.

In another exemplary embodiment, the system prompt is obtained by performing prompt tuning.

In a further exemplary embodiment, the game state data is determined from user telemetry data and game events occurring in the video game during the process of the video game.

In an additional exemplary embodiment, the response from the LLM is further according to game metadata representative of gaming parameters of the video game stored in a persistent database.

In another exemplary embodiment, the game metadata is provided as input of the LLM by performing retrieval-augmented generation process.

In an exemplary embodiment, the LLM is obtained by fine-tuning a pre-trained LLM based on learning data in a context of a genre of the video game.

In a further exemplary embodiment, the voice response is rendered according to a parameter representative of personality.

In an alternative embodiment, there is provided a method for providing gaming assistance to a user playing a video game, the method being implemented by at least one processor and comprising:
- receiving a voice query from the user, wherein the voice query relates to a process of the video game;
- converting the voice query from an audio format to a text format to generate user query data;
- acquiring game state data associated with the video game, the game state data comprising real-time telemetry and detected game events derived from the process or gameplay of the video game;
- generating a composite prompt based on the user query data and the game state data, the composite prompt comprising a first portion reflecting the user query data and the game state data and a second portion comprising system instructions determined by a prompt tuning process based on a genre of the video game;
- obtaining a gaming assistance response by providing the composite prompt as input to a large language model trained to provide gaming assistance;
- generating a voice response corresponding to the gaming assistance response, the voice response being rendered according to personality parameters associated with a gaming assistance system; and
- outputting the voice response to the user via an audio output device.

According to a second aspect of the present application, there is provided an apparatus of providing gaming assistance to a user playing a video game, wherein the apparatus comprises a memory associated with at least a processor configured to implement the method in accordance with the first aspect of the present application.

According to a third aspect of the present application, there is provided a computer program product including instructions which, when the program is executed by one or more processors, causes the one or more processors to carry out a method according to the first aspect of the present application.

According to a fourth aspect of the present application, there is provided a non-transitory storage medium carrying instructions of program code for executing a method according to the first aspect of the present application.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows an example of a gaming assistance environment for a user playing a video game, in accordance with at least one exemplary embodiment;
**Figure 2** shows a schematic block diagram of step(s) of a method of providing gaming assistance to a user playing a video game, in accordance with at least one exemplary embodiment;
**Figure 3** illustrates a schematic block diagram of an example of a system in which various aspects and exemplary embodiments are implemented.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

Exemplary embodiments described hereinafter may be combined with each other or each of the exemplary embodiments may be individually implemented, e.g., as an alternative embodiment.

At least one of the aspects generally relates to an apparatus, system and method and apparatus or system for providing real-time assistance to a user during the execution and process of a video game. The system functions as an intelligent gaming assistant or copilot that interprets voice input from the user, contextualizes the input based on the current game state of the video game, and provides a voice-based response generated through a large language model (LLM) to the user.

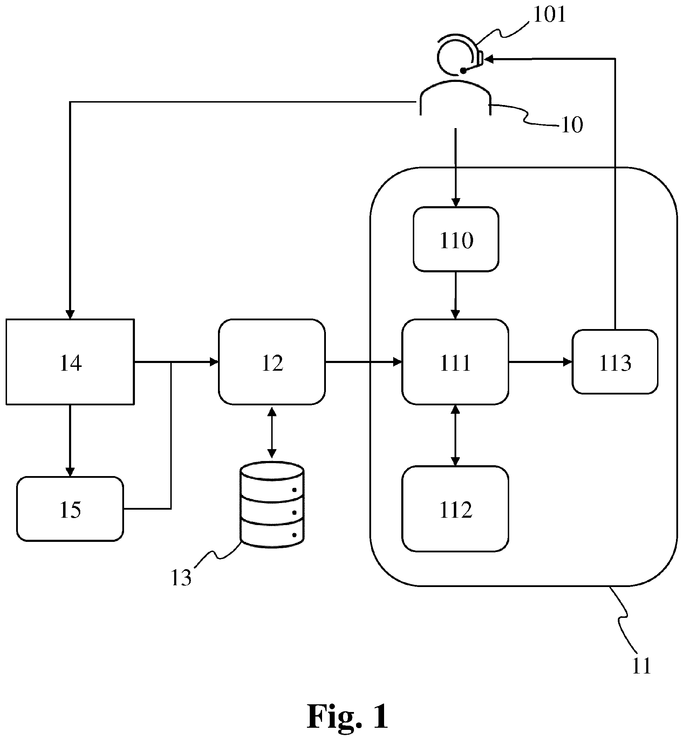

**Figure 1** illustrates a gaming assistance environment for a user playing a video game in accordance with at least one exemplary embodiment.

Blocks of figure 1 represent indifferently operations/steps of a process/method and processing units implementing such operations/steps of the process/method. The processing units may be implemented as a single element or as separate elements as a combination of hardware and software as known to those skilled in the art.

Figure 1 shows a user 10, also called player, playing a video game executed as a gaming application run by a game engine 14. The user vocally interacts with an artificial intelligence (AI) system 11.

The Al system 11 comprises different components and modules such as a speech-to-text (STT) conversion module 110, an Al engine 111, a large-language model (LLM) 112 and a text-to-speech (TTS) conversion module 113. The different modules communicate with each other and may be implemented as a single element or as separate elements as a combination of hardware and software as known to those skilled in the art.

User 10 may engage with the gaming application through various computing architectures implementing the game engine 14. These architectures include, but are not limited to, personal computers (PCs), mobile computing devices such as smartphones and tablets, and dedicated gaming consoles operatively connected to a display device, such as a television.

In one embodiment, user 10 accesses a gaming application executed locally on a personal computer. The application may be installed and stored on a local storage medium and executed by a local processor and graphical processing units (GPU). User 10 may provide input to the gaming application via one or more peripheral devices, including a keyboard, mouse, or external game controller.

In another embodiment, user 10 accesses the gaming application through a mobile computing device. The mobile device may execute the gaming application locally via a touchscreen interface, and may optionally be paired with external input devices, such as a Bluetooth controller. The mobile device may also include integrated sensors for detecting orientation, acceleration, and other user interactions.

In yet another embodiment, user 10 interacts with a gaming application executed on a game console. The console may be communicatively coupled to an external display device and configured to receive user input via one or more handheld controllers. The gaming application may be stored locally on the console or accessed remotely through a network connection.

In some implementations, the gaming application is executed locally on the user device (local gaming model), wherein the game logic, rendering, and processing are performed by the local hardware resources. In other implementations, the gaming application is executed remotely on a cloud server (cloud gaming model), and a video stream of the gameplay is transmitted to the user device. In such cases, the user device functions primarily as a display and input relay terminal, transmitting control commands and receiving video and audio streams in real time.

User 10 interacts with the gaming application through various input devices, which may include, but are not limited to, handheld controllers, keyboards, mice, touchscreens, microphones, motion-sensing devices, and voice recognition systems. The specific configuration of input and output devices may vary based on the hardware platform and the type of gaming application being executed.

The gaming application may correspond to one or more genres, including but not limited to: first-person shooter (FPS) games, characterized by player-controlled weapon-based combat in a first-person perspective; real-time strategy (RTS) games, which involve managing resources and issuing commands to units in a real-time environment; role-playing games (RPGs), which provide narrative-driven gameplay with character development; racing games, which simulate vehicle operation and competitive driving scenarios; sports simulation games, which emulate real-world sports mechanics; and adventure or platform games, which emphasize exploration, problem-solving, and environmental interaction.

User 10 interacts with the artificial intelligence (AI) system 11 and/or the gaming application using vocal input. The Al system 11 is configured to receive, process, and respond to voice commands or spoken queries provided by user 10. The vocal interaction may be facilitated through one or more audio input and output devices operatively coupled to or integrated within a gaming device, computing system, or peripheral hardware.

User 10 may provide voice input using a headset 101 that includes an integrated microphone and one or more audio output elements (e.g., headphones or earphones). The headset 101 may be wired or wirelessly connected to the host system, e.g., gaming engine 14 and/or Al system 11 or part of the Al system 11 (e.g., speech-to-text conversion module 110), via a communication protocol such as Bluetooth, USB, or a proprietary audio interface. The microphone captures the user's speech, e.g., a vocal query, which is transmitted to Al system 11 for processing.

In another example, user 10 may use an external microphone positioned in proximity to user 10. The microphone may be a standalone device connected to the system through a wired or wireless connection. The external microphone may include noise-canceling functionality to enhance the clarity of the input signal and reduce background interference.

Al system 11 may also receive vocal input from a built-in microphone array, such as those integrated into a gaming console, smart television, personal computer, or mobile device. Microphone arrays may support beamforming or spatial filtering techniques to isolate the user's voice and improve the accuracy of voice recognition, even in multi-user or noisy environments.

Al system 11 may deliver responses to the user via loudspeakers, which may be integrated into the host device or configured as external audio output devices. Alternatively, audio responses may be transmitted to the user's headphones, either as part of the headset 101 or as separate ear-worn devices. In some embodiments, the audio output may be contextually adjusted based on the type of interaction, user preferences, or environmental conditions.

A process of providing gaming assistance to user 10 is implemented by one or more processors, notably one or more processors of one or more modules or components of Al system 11.

In a first operation of the process, user 10 initiates interactions with Al system 11 by issuing a vocal query, also called voice command, using natural language questions, the vocal query being for example preceded by predefined wake words or trigger phrases to wake up Al system 11.

Al system, e.g., speech-to-text (STT) module 110, receives a voice query of user 10, the voice query relating to the process or gameplay of the video game at a timepoint associated with the vocal query.

The voice query may for example be related to the context of the gameplay of the video game, to one or more events occurring in the gameplay of the video game, to completing an objective by advancing to a subsequent state from a current state in the video game, to obtaining advice about an appropriate strategy, etc.

Al system 11 may respond with instructional guidance, contextual information, in-game tips, status updates, or control actions depending on the operational context. In certain implementations, Al system 11 may engage in a continuous or multi-turn dialogue with user 10, maintaining contextual awareness over time to improve the relevance and coherence of its responses.

This vocal interaction modality enables hands-free and immersive user experience and may operate in conjunction with other input modalities such as game controllers, keyboards, or graphical user interfaces.

In a second operation of the process, the voice query is interpreted by Al system 11, the voice query being translated from an audio format to a text format by speech-to-text conversion module 110 of Al system 11.

Speech-to-text conversion module 110 is configured to process audio signals representing spoken input from user 10 and convert the input into corresponding textual data. Speech-to-text conversion module 110 is one of the elements of natural language processing functionality of Al system 11, enabling accurate interpretation and subsequent response generation.

Speech-to-text conversion module 110 operates by receiving voice query or input captured through one or more microphones. Speech-to-text conversion module 110 may first apply voice activity detection techniques to identify the presence of speech within the audio stream. Once speech is detected, speech-to-text conversion module 110 processes the audio using a trained model capable of recognizing and transcribing spoken language into text.

The transcription process typically involves multiple stages, including the segmentation of audio into linguistic units (tokenization), the transformation of these units into structured data formats (encoding), and the contextual interpretation of the resulting text to ensure accurate understanding of user intent. These stages may be executed using advanced machine learning models, such as those based on neural network architecture designed for sequential data processing.

The generated textual output is transmitted to other components of Al system 11 for further processing. For example, it may be analyzed to determine user commands, generate system responses, or update a conversational context model. Speech-to-text conversion module 110 may also support features such as speaker differentiation, noise reduction, and adaptation to user-specific speech patterns.

Depending on system configuration and performance requirements, speech-to-text conversion module 110 may operate locally on the user's device or utilize a remote processing service. This flexibility allows Al system 11 to maintain low latency and high accuracy in various usage scenarios, including gaming, virtual assistance, and real-time communication.

In a third operation of the process, a composite prompt is generated according to user query data representative of the voice query and game state data representative of a current game state associated with the process or gameplay of the video game. The generation of the composite prompt is for example performed by Al engine 111, the user query data being received by Al engine 11 from speech-to-text conversion module 110.

AI engine 111 is configured to automatically generate a composite prompt for input into a large language model (LLM) 112.

The composite prompt may comprise two distinct parts, namely a user prompt and a system prompt. AI engine 111 constructs the composite prompt dynamically based on the user's spoken input and the current game context.

The user prompt includes a textual representation of the user's vocal query, which is obtained from speech-to-text conversion module 110, and is further enriched with game state data representing the in-game conditions at the time the query was initiated. The game state data may comprise various parameters, such as the player's position within the game environment, current objectives, inventory contents, health status, interactions with non-player characters (NPCs), and other gameplay-specific metrics. This contextual information is formatted and integrated with the user's transcribed vocal query to form a coherent and semantically rich user prompt that accurately reflects the player's situation and intent.

In an embodiment, the game state data included in the user prompt is derived from a combination of user telemetry data and game events occurring during the execution of the video game. This game state data represents the current state of the game at the time associated with the vocal query. The game state data is used to provide Al system 11 with the necessary context to generate a relevant and situationally appropriate response.

User telemetry data refers to real-time information collected during gameplay that reflects the player's behavior, interactions, and system inputs. This may include data points such as:
- The player's position, movement patterns, and orientation in the game world, i.e., the position, movement patterns, and orientation of a character or avatar controlled by user 10,
- Status indicators such as health level, stamina, ammunition, and inventory contents,
- Player inputs and control actions (e.g., keyboard, controller, or touchscreen interactions),
- Progress through missions, tasks, or checkpoints,
- Frequency and type of interactions with game elements or non-player characters (NPCs).

Telemetry data is typically captured by instrumentation integrated into the game software. These monitoring components collect and update data continuously or at defined intervals, enabling the system to maintain an up-to-date view of the player's ongoing activity and game conditions.

Game events refer to occurrences or transitions within the video game that are detectable by the system and that are relevant to gameplay context or player experience. A game event may be triggered by player actions, game logic, or environmental conditions, and may involve one or more of the following:
- Gameplay events, such as the player defeating an enemy, completing a mission objective, taking damage, or unlocking an item,
- Audio events, including the triggering of specific sound effects or voice lines,
- Visual events, such as changes in lighting, screen effects, or object visibility,
- Haptic events, involving the activation of vibration or tactile feedback on a controller or haptic device,
- Chroma events, such as transitions in screen coloration or overlays that indicate a change in game status or alerts.

Game events are detected by monitoring components within the game engine 14, which may use event listeners, condition-based triggers, or state machine transitions to identify relevant occurrences. These events are then logged or processed in real time to contribute to the construction of the current game state.

In a variant, game events are detected through the application of computer vision techniques by an event detection module 15 that performs real-time analysis of the video content generated by the video game during gameplay. This method allows the system to recognize and classify visual cues and graphical elements rendered on-screen, without relying solely on internal game engine data or telemetry logs.

The computer vision-based detection process involves capturing video frames from the game output stream and analyzing these frames using one or more trained models or algorithms. These models are designed to identify visual patterns, objects, color transitions, or motion sequences that correspond to specific game events. Examples of detectable elements include:
- On-screen text overlays, such as mission updates, damage indicators, or dialog prompts,
- HUD (Heads-Up Display) elements, such as changes in health bars, minimaps, inventory icons, or targeting reticles,
- Color shifts or visual effects, which may indicate player status changes (e.g., low health, power-up activation, screen tint during damage),
- Enemy presence, item pickups, or environmental hazards identified through object recognition,
- Animations or transitions, such as explosions, character movements, or cutscene triggers.

To detect these elements, the system may use a combination of image classification, object detection, semantic segmentation, and optical character recognition (OCR) methods. These techniques allow the system to extract structured information from the unstructured video stream, enabling the identification of meaningful events as they occur.

The detected game events are then time-aligned with other system inputs, such as user telemetry data and audio cues, to construct a comprehensive and synchronized representation of the current game state. This enables Al system 11 to interpret gameplay conditions and respond with high situational awareness, even in cases where direct access to the game engine or event logs is limited or unavailable. This visual analysis approach may be implemented in scenarios involving third-party games or platforms where internal event tracking is restricted and allows for broad compatibility with a variety of game types and graphical styles.

The combination of user telemetry data and game events is processed to create a structured representation of the current game state. This representation is incorporated into the user prompt, alongside the textual content derived from the user's vocal query. The resulting user prompt accurately reflects both the user's intent and the gameplay context at the time the vocal query was made.

The game state data representative of the current game state may be determined by logic layer 12 of the gaming application run by the game engine 14. The game state data is then received by Al engine 111 from the logic layer 12.

By including this contextual data, Al system 11 ensures that the response generated is grounded in the actual in-game situation, taking into account not only player input and position, but also system-detected events such as combat encounters, environmental changes, or haptic feedback. This enhances the accuracy, specificity, and usefulness of the response provided to user 10.

The system prompt may be generated by Al engine 111 through the application of prompt tuning techniques. Prompt tuning involves selecting and optimizing specific input structures, instructions, or behavioral cues that guide the LLM's response generation process. The prompt tuning is performed with consideration to the genre of the video game, such that the LLM's behavior aligns with the thematic, stylistic, and functional expectations of the game. For example, in a first-person shooter (FPS), the system prompt may instruct the LLM to provide concise, tactical advice, whereas in a role-playing game (RPG), the system prompt may emphasize narrative consistency and character-driven guidance.

The prompt tuning process may be based on a set of predefined prompt templates, genre-specific language patterns, or gameplay-oriented heuristics. These tuned prompts are designed to influence the LLM's output without requiring changes to the underlying model weights, thereby preserving general-purpose capabilities while adapting the behavior to the video game context.

Together, the user prompt and system prompt are concatenated or combined in a structured format and submitted as input to LLM 112. LLM 112 then processes the combined prompt and generates a response that is contextually grounded, genre-appropriate, and aligned with the player's current gameplay scenario. This architecture enables Al system 11 to provide intelligent, responsive, and situationally relevant assistance across a wide range of gaming applications.

In a fourth operation of the process, a response to the user's vocal query is generated and performed by the large language model (LLM) 112 that receives as input the composite prompt generated by Al engine 111. LLM 112 may correspond to a pre-trained model, initially trained on a broad corpus of general language data and subsequently subjected to fine-tuning to adapt its behavior to the specific requirements of interactive gaming environments.

The composite prompt provided to LLM 112 includes the user prompt, which incorporates the user's transcribed vocal query and associated game state data, and the system prompt, which is constructed using prompt tuning techniques aligned with the genre of the video game. Upon receiving this prompt, LLM 112 processes the input to generate a natural language response that is semantically coherent, contextually accurate, and appropriate for the current gameplay scenario.

LLM 112 used in Al system 112 may have been fine-tuned during a fine-tuning process designed to optimize its performance for specific video game genres, i.e., for the specific genre of video game user 10 is currently playing.

The genre, or type, of video game user 10 is currently playing may be received by Al system as metadata from game engine 14 or may be derived or determined by Al system from data identifying the video game, e.g., the name and/or version of the gaming application. Data identifying the genre of the video game may be used to select the appropriate LLM 112 corresponding to the genre among a list of different LLMs each fine-tuned for a different genre of video game.

Fine-tuning is carried out by continuing the training of the pre-trained model on a curated dataset composed of text samples representative of the target genre. These datasets may include annotated player interactions, narrative dialogues, in-game instructions, genre-specific terminology, gameplay tips, and scenario-based responses.

For example:
- In the case of a first-person shooter (FPS), the fine-tuning dataset may emphasize concise and tactical language, rapid decision-making instructions, and terminology related to combat, weapons, and objectives,
- For a role-playing game (RPG), the dataset may focus on rich dialogue structures, lore-driven responses, character consistency, and immersive narrative elements,
- In a real-time strategy (RTS) game, the dataset may include language reflecting resource management, unit deployment strategies, and multistep tactical planning.

The fine-tuning process may involve supervised learning techniques, wherein input-output pairs are used to adjust the model weights to better align with desired behaviors. The fine-tuning process is conducted in controlled training environments using genre-specific prompts and evaluation metrics to ensure alignment, coherence, and responsiveness.

Once fine-tuned, LLM 112 exhibits improved domain sensitivity and enhanced ability to generate responses that match the tone, pacing, and informational needs of the particular video game genre. The model remains capable of understanding diverse user inputs while delivering answers that are consistent with gameplay conventions and user expectations.

In an embodiment, the response generated by LLM 112 is further based on game metadata representing persistent gaming parameters of the gaming application (i.e., of the video game) by using a retrieval-augmented generation (RAG) approach. This method enhances the relevance and accuracy of the generated response by supplementing the LLM's internal knowledge with external data retrieved at runtime.

The game metadata comprises structured or semi-structured information stored on a persistent data store 13, such as a database or file system, and may include parameters such as character attributes, unlocked achievements, item inventories, completed missions, skill levels, progression status, and other historical or player-specific data, e.g., amplitude of movements, intensity of blows inflicted on an enemy, etc. This metadata is maintained independently of the real-time game state and represents a longitudinal view of the player's interaction history with the video game.

When LLM 112 receives the composite prompt (including the user prompt (user query and current game state data) and the system prompt (genre-specific instructions)), Al engine 111 may determine that additional context from the persistent metadata is relevant for generating a complete and contextually appropriate response. In such cases, Al system 11 performs a retrieval step to query the persistent data store 14 based on key elements extracted from the composite prompt.

The retrieval mechanism may use semantic search, keyword matching, or structured queries to locate relevant metadata entries corresponding to the player profile or game session. The retrieved metadata is then formatted and appended to the original prompt, or embedded into the prompt structure, to form an augmented prompt that contains both real-time game context and persistent player data.

LLM 112 processes the augmented prompt using a retrieval-augmented generation architecture, wherein the retrieved external content is treated as authoritative or supplemental context during the response generation process. This allows LLM 112 to generate outputs that reference specific past events, inventory items, unlocked capabilities, or long-term player statistics, thereby delivering personalized and accurate responses that go beyond the LLM's pre-trained knowledge or immediate game state data.

By integrating real-time context with persistent metadata through retrieval-augmented generation, Al system 11 ensures that user interactions are informed by a comprehensive understanding of both current gameplay and the player's historical data, improving the quality, precision, and personalization of Al-driven assistance within the gaming environment.

In a fifth operation of the process, a voice response to the voice query is generated based on the response output by LLM 112.

The output generated by LLM 112 is transmitted to text-to-speech conversion module 113 of Al system 11, where the output of LLM 112 is converted into speech and delivered to user 10 through one or more audio output devices, thereby completing the interactive vocal query-response cycle.

Text-to-speech (TTS) conversion module 113 is configured to generate a voice or audio response based on the textual output produced by LLM 112. TTS conversion module 113 provides responses to user 10 in a natural and interactive auditory format, facilitating seamless voice-based interaction within the gaming environment.

Upon generation of a text response by LLM 112, the text is transmitted to the TTS conversion module 113. TTS conversion module 113 processes the input text and synthesizes corresponding speech audio in real time. The TTS conversion process may involve several stages, including:
1. Text normalization, which prepares the input by resolving symbols, abbreviations, and numerical expressions into full, readable words;
2. Linguistic analysis, which determines prosody elements such as stress, rhythm, and intonation patterns based on the syntactic structure of the text;
3. Phoneme conversion, wherein the textual content is transformed into a sequence of phonetic representations; and
4. Speech synthesis, where the phonetic sequence is rendered into audio waveforms using a synthesis engine.

TTS conversion module 113 may utilize traditional concatenative synthesis methods or, in more advanced configurations, employ neural network-based synthesis models, such as Tacotron, WaveNet, or other deep learning architectures. These models allow for the generation of high-fidelity, human-like speech with dynamic pitch, tone, and expression, contributing to a more immersive and engaging user experience.

The synthesized audio output is then delivered to user 10through one or more audio output devices, such as headphones, headsets, built-in speakers, or external loudspeakers, depending on the hardware configuration of the gaming system. In some embodiments, TTS conversion module 113 may also support voice personalization, allowing the Al response to be delivered in a selectable or adaptive voice profile that aligns with user preferences or the stylistic tone of the video game.

Voice personalization is for example according to a parameter representative of personality. The personality may correspond to one of the following personalities: gentle, rude, polite, assertive, encouraging, etc.

This voice-based delivery of the LLM-generated response enables real-time, natural dialogue between user 10 and Al system 11, enhancing accessibility, interactivity, and overall gameplay immersion.

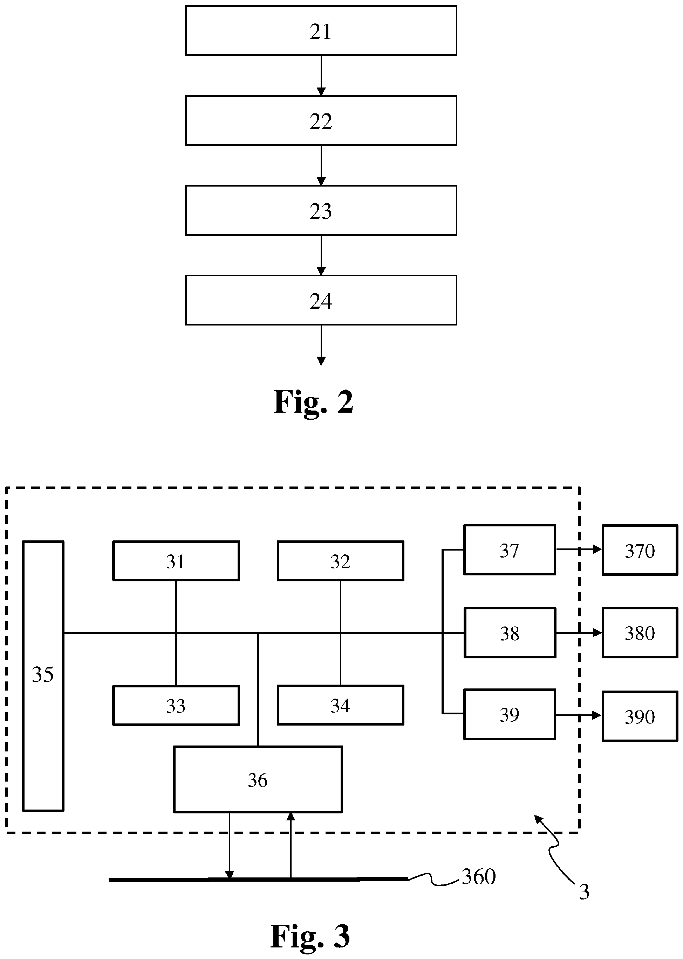

**Figure 2** shows a schematic block diagram of steps of a method of providing gaming assistance to a user playing a video game, in accordance with at least one exemplary embodiment.

In a first step 21, a voice query of the user is received, the voice query relating to a process of the video game.

In a second step 22, a composite prompt is generated according to user query data representative of the voice query and game state data representative of a current game state associated with the process of the video game.

In a third step 23, a response to the voice query is obtained from a large language model, called LLM, receiving as input the composite prompt, the LLM having been trained to provide gaming assistance.

In a fourth step 24, a voice response to the voice query is generated based on the response obtained from the LLM.

**Figure 3** shows a schematic block diagram illustrating an example of an apparatus or system 3 in which various aspects and exemplary embodiments are implemented.

System 3 may be embedded as one or more devices including the various components described below. In various embodiments, system 3 may be configured to implement one or more of the aspects described in the present application.

Examples of equipment that may form all or part of the system 3 include personal computers, laptops, smartphones, tablet computers, digital multimedia set top boxes and their associated processing systems, display devices, light-emitting devices, servers, chroma encoders, chroma decoders, video encoders, video decoders, audio encoders, audio decoders, post-processors processing output from a chroma and/or video and/or audio decoder, pre-processors providing input to chroma and/or video and/or audio encoder, web servers, wireless (e.g., Bluetooth^{®}) connected devices, game peripherals such as game controller, mouse, mousepad, keyboard, headset, headphones, any other device for processing vocal query, game parameter, game data, game metadata, user telemetry, or other communication devices. Elements of system 3, singly or in combination, may be embodied in a single integrated circuit (IC), multiple ICs, and/or discrete components. For example, in at least one embodiment, the processing and encoder/decoder elements of system 3 may be distributed across multiple ICs and/or discrete components. In various embodiments, the system 3 may be communicatively coupled to other similar systems, or to other electronic devices, via, for example, a communication bus or through dedicated input and/or output ports.

System 3 may include at least one processor 31 configured to execute instructions loaded therein for implementing, for example, the various aspects described in the present application. Processor 31 may include embedded memory, input output interface, and various other circuitries as known in the art. System 3 may include at least one memory 32 (for example a volatile memory device and/or a non-volatile memory device). System 3 may include a storage device 34, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. Storage device 34 may include an internal storage device, an attached storage device, and/or a network accessible storage device, as non-limiting examples.

System 3 may include an encoder/decoder module 33 configured, for example, to process data to provide encoded/decoded video signal or data and/or encoded/decoded audio signal or data, and encoder/decoder module 33 may include its own processor and memory. Encoder/decoder module 33 may represent module(s) that may be included in a device to perform the encoding and/or decoding functions. As is known, a device may include one or both of the encoding and decoding modules. Additionally, encoder/decoder module 33 may be implemented as a separate element of system 3 or may be incorporated within processor 31 as a combination of hardware and software as known to those skilled in the art.

Program code to be loaded onto processor 31 or encoder/decoder module 33 to perform the various aspects described in the present application may be stored in storage device 34 and subsequently loaded onto memory 32 for execution by processor 31. In accordance with various embodiments, processor 31, memory 32, storage device 34, and encoder/decoder module 33 may store one or more of various items during the performance of the processes described in the present application. Such stored items may include, but are not limited to, data representative of chroma/lighting content, data representative of video content, a bitstream, matrices, variables, and intermediate or final results from the processing of equations, formulas, operations, and operational logic.

In several embodiments, the memory inside processor 31 and/or encoder/decoder module 33 may be used to store instructions and to provide working memory for processing that may be performed during data processing, encoding or decoding.

In other embodiments, however, a memory external to the processing device (for example, the processing device may be the processor) may be used for one or more of these functions. The external memory may be memory 32 and/or storage device 34, for example, a dynamic volatile memory and/or a non-volatile flash memory. In at least one embodiment, a fast external dynamic volatile memory such as RAM may be used as working memory for data processing.

The input to the elements of system 3 may be provided through various input devices as indicated in block 35. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

Various embodiments rearrange the order of the above-described (and other) elements, remove some of these elements, and/or add other elements performing similar or different functions.

Adding elements may include inserting elements between existing elements, such as, for example, inserting amplifiers and an analog-to-digital converter. In various embodiments, the RF portion may include an antenna.

Additionally, the USB and/or HDMI terminals may include respective interface processors for connecting system 3 to other electronic devices across USB and/or HDMI connections. It is to be understood that various aspects of input processing, for example, analog to digital conversion, time domain to frequency domain conversion, down sampling, band pass or low pass filtering, Reed-Solomon error correction, may be implemented, for example, within a separate input processing IC or within processor 31 as necessary. Similarly, aspects of USB or HDMI interface processing may be implemented within separate interface ICs or within processor 31 as necessary. The processed stream may be provided to various processing elements, including, for example, processor 31, and encoder/decoder module 33 operating in combination with the memory and storage elements to process the data stream as necessary for presentation on an output device.

Various elements of system 3 may be provided within an integrated housing. Within the integrated housing, the various elements may be interconnected and transmit data therebetween using suitable connection arrangement, for example, an internal bus as known in the art, including the I2C bus, wiring, and printed circuit boards.

System 3 may include communication interface 36 that enables communication with other devices via communication channel 360. Communication interface 36 may include, but is not limited to, a transceiver configured to transmit and to receive data over communication channel 360. Communication interface 36 may include, but is not limited to, a modem or network card and communication channel 360 may be implemented, for example, within a wired and/or a wireless medium.

Data may be streamed to system 3, in various embodiments, using a Wi-Fi network such as IEEE 802.11. The Wi-Fi signal of these embodiments may be received over communication channel 360 and communications interface 36 which are adapted for Wi-Fi communications. Communication channel 360 of these embodiments may be typically connected to an access point or router that provides access to outside networks including the Internet for allowing streaming applications and other over-the-top communications.

Other embodiments may provide streamed data to system 3 using a set-top box or a computer that delivers the data over the HDMI connection of block 35.

Still other embodiments may provide streamed data to system 3 using the RF connection of block 35.

The streamed data may be used as a way for signaling information used by system 3. The signaling information may comprise the data encoded in a container such as a binary stream for example.

It is to be appreciated that signaling may be accomplished in a variety of ways. For example, one or more syntax elements, flags, and so forth may be used to signal information to a corresponding data processing device in various embodiments.

System 3 may provide an output signal to various output devices, including a display 370, audio output device 380, and other peripheral devices 390 like haptic devices/actuators.

In various embodiments, control signals may be communicated between system 3 and display 370, audio output device 380, or other peripheral devices 390 using signaling such as AV.Link (Audio/Video Link), CEC (Consumer Electronics Control), Audio protocols, USB (Universal Serial Bus), HID (Human Interface Design) for USB, HIF UHP (Haptics Industry Forum - Universal Haptic Protocol) or other communications protocols that enable device-to-device control with or without user intervention.

The output devices may be communicatively coupled to system 3 via dedicated connections through respective interfaces 37, 38, and 39.

Alternatively, the output devices may be connected to system 3 using communications channel 360 via communication interface 36. Display 370, audio output device 380 and/or peripheral devices 390 such as haptic device(s) (actuators) may be integrated in a single unit with the other components of system 3 in an electronic device such as, for example, a television.

In various embodiments, display interface 37 may include a display driver, such as, for example, a timing controller (T Con) chip.

Display 370, audio output device 380 and/or peripheral devices 390 such as haptic device(s) (actuators) may alternatively be separate from one or more of the other components. In various embodiments in which display 370, audio output device 380 and/or peripheral devices 390 such as haptic device(s) (actuators) may be external components, the output signal may be provided via dedicated output connections, including, for example, HDMI ports, USB ports, or COMP outputs.

In **Figure 1****,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic and/or chroma and/or audio encoders, video and/or haptic and/or chroma and/or audio decoders, haptic engine, chroma engine, game engine, post-processors processing output from a video decoder, pre-processors providing input to a video encoder, web servers, set-top boxes, wireless connected wearable haptic devices, e.g., Bluetooth^{®} connected wearable haptic devices, game controller, mouse, mousepad, keyboard, palm rest, chairs, desk, headset, XR headset, headphones, and any other device for processing game data or signals, or other communication devices. As should be clear, the equipment may be mobile.

Computer software may be implemented by processor 31 or by hardware, or by a combination of hardware and software. As a non-limiting example, the embodiments may be also implemented by one or more integrated circuits. Memory 32 may be of any type appropriate to the technical environment and may be implemented using any appropriate data storage technology, such as optical memory devices, magnetic memory devices, semiconductor-based memory devices, fixed memory, and removable memory, as non-limiting examples. Processor 31 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Additionally, this application may refer to "obtaining" various pieces of information. Obtaining the information may include one or more of, for example, receiving the information, determining the information, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Furthermore, "receiving" is typically involved, in one way or another, during operations such as, for example, storing the information, processing the information, transmitting the information, moving the information, copying the information, erasing the information, calculating the information, determining the information, or estimating the information.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of providing gaming assistance to a user playing a video game, the method being implemented by at least a processor and comprising:
- receiving (21) a voice query of said user, said voice query relating to a process of said video game;
- generating (22) a composite prompt according to user query data representative of said voice query and game state data representative of a current game state associated with said process of said video game;
- obtaining (23) a response to said voice query from a large language model, called LLM, receiving as input said composite prompt, said LLM having been trained to provide gaming assistance;
- generating (24) a voice response to said voice query based on said response.

2. The method according to claim 1, further comprising translating said voice query from an audio format to a text format, said user query data being obtained from said text format.

3. The method according to claim 1 or 2, wherein said composite prompt comprises a first part corresponding to user prompt and a second part corresponding to system prompt, said user prompt comprising said user query data and said game state data.

4. The method according to claim 3, wherein said system prompt comprises instructions for said LLM determined according to a genre of said video game.

5. The method according to claim 3 or 4, wherein said system prompt is obtained by performing prompt tuning.

6. The method according to any one of claims 1 to 5, wherein said game state data is determined from user telemetry data and game events occurring in said video game during said process of said video game.

7. The method according to claim 6, wherein said game events are detected by analyzing video content and/or audio content of said video game.

8. The method according to any one of claims 1 to 7, wherein said response from said LLM is further according to game metadata representative of gaming parameters of said video game stored in a persistent database.

9. The method according to claim 8, wherein said game metadata is provided as input of said LLM by performing retrieval-augmented generation process.

10. The method according to any one of claims 1 to 3, wherein said LLM is obtained by fine-tuning a pre-trained LLM based on learning data in a context of a genre of said video game.

11. The method according to any one of claims 1 to 10, wherein said voice response is rendered according to a parameter representative of personality.

12. An apparatus (3) of providing gaming assistance to a user playing a video game, wherein said apparatus comprising a memory (32) associated with at least a processor (31) configured to implement the method according to any one of claims 1 to 11.

13. A non-transitory processor readable medium having stored therein instructions for causing a processor to perform at least the steps of the method according to one of claims 1 to 11.

14. A computer program product comprising instructions of program code for executing the method according to any one of claims 1 to 11, when said program is executed on a computer.
